Europäisches Patentamt

European Patent Office

Office européen des brevets

(19)

(11) Publication number: **0 198 533 B1**

# EUROPEAN PATENT SPECIFICATION

(45) Date of publication of patent specification: 24.07.91    (51) Int. Cl.⁵: **A23D 7/02, B29C 47/38**

(21) Application number: 86200521.2

(22) Date of filing: 26.03.86

The file contains technical information submitted
after the application was filed and not included in
this specification

(54) **Process for the preparation of an edible fat-containing product.**

(30) Priority: 27.03.85 GB 8508013
              24.05.85 NL 8501487

(43) Date of publication of application:
      22.10.86 Bulletin 86/43

(45) Publication of the grant of the patent:
      24.07.91 Bulletin 91/30

(84) Designated Contracting States:
      AT BE CH DE FR GB IT LI NL SE

(56) References cited:
      EP-A- 0 041 303
      EP-A- 0 101 104
      WO-A-83/03222
      GB-A- 944 705
      GB-A- 1 327 511

(73) Proprietor: **UNILEVER NV**
      **Burgemeester s'Jacobplein 1 P.O. Box 760**
      **NL-3000 DK Rotterdam(NL)BE CH DE FR IT LI**
      **NL SE AT**

      Proprietor: **UNILEVER PLC**
      **Unilever House Blackfriars P.O. Box 68**
      **London EC4P 4BQ(GB)GB**

(72) Inventor: **Bodor, Janos**
      **Prins Hendriklaan 38**
      **NL-2281 EC Rijswijk(NL)**
      Inventor: **Van Heteren, Jan**
      **Acaciadreef 14**
      **NL-3137 BB Vlaardingen(NL)**

(74) Representative: **Land, Addick Adrianus Gos-**
      **ling et al**
      **OCTROOIBUREAU ARNOLD & SIEDSMA P.O.**
      **Box 18558**
      **NL-2502 EN The Hague(NL)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

Rank Xerox (UK) Business Services

## Description

The present application is concerned with a process for the preparation of an edible fat-containing product wherein a composition which comprises fat is subjected to working and cooling operations to plastify the composition, which fat is a fat that contains at most 25% by weight of crystallized fat after equilibration at 10°C.

Such a process is described in European Patent 0 041 303. The patent describes a process wherein a margarine is prepared from a composition which comprises 69.7% by weight sunflower oil, 10.3% by weight of a hydrogenated fat, and 20% by weight aqueous phase, by plastifying the composition by passing it through cooling and working devices of the Votator type. The N-value at 10°C (the weight percentage of crystallized fat present in the fat blend after equilibration of the fat blend at 10°C, determined by NMR as described in "Fette, Seifen, Anstrichmittel" 80 (1978), 180-186) of the fat blend was 11. The products obtained had rather low hardness values.

From European patent application No. 101,104 it is known to prepare an edible oil and water containing emulsion comprising inter alia processing an oil-in-water emulsion and a separate water phase followed by mixing these phases to obtain the final emulsion.

British patent No. 1,327,511 describes mixing and emulsifying two separate process streams, one warm liquid containing crystallisable fat and a second, cold liquid containing substantially no crystallisable fat, followed by working and packing of the partially crystallized mixture.

The present invention provides a process wherein products can be obtained from compositions which comprise fats or fat blends that contain small amounts of crystallized fat at temperatures from 5-20°C, that are relatively hard without being brittle.

The present invention provides a process for the preparation of an edible fat-containing product having a plastic nature, starting with a composition which comprises at least 10% by weight of fat, the balance consisting essentially of material selected from water, protein, gas, emulsifiers, gelling and thickening agents, salt, flavour compounds, colouring matter and mixtures of two or more thereof,

said fat in the composition containing at most 25% by weight of crystallized fat after equilibration at 10°C as a result of a content of unsaturated fatty acid residues in the triglycerides,

and subjecting that composition to the following steps:

a) cooling the composition in a heat exchanger, and

b) working the composition by passing it through a device which comprises two closely spaced, mutually displaceable surfaces, each having a pattern of cavities which overlap during movement of one surface with respect to the other, the composition moving between the surfaces and tracing a path through cavities alternating in the mutually displaceable surfaces.

Making products which are sufficiently hard without being brittle is particularly problematic for the so-called health margarines and shortenings and for similar health products. Such products contain large amounts of polyunsaturated fatty acid residues and small amounts of saturated fatty acid residues in the triglycerides. Because of this, the solids content of the fats at ambient temperatures is low and the minimum hardness required at temperatures in the range of 5-20°C is one of the factors limiting the amount of polyunsaturated fatty acid residues that can be present in the product.

The weight ratio of polyunsaturated fatty acid residues and saturated fatty acid residues in the composition is preferably at least about 2,5, more preferably at least about 4. The present process can, however, also advantageously be used for the preparation of products from other compositions which comprise fat that would contain at most 25% by weight of crystallized fat after equilibration at 10°C.

Preferably, the fat used in the composition is fat that contains after equilibration at 10°C, at most about 20% by weight, more preferably 10-15% by weight of crystallized fat.

The composition used in the present process preferably comprises at least 20% by weight of fat, the balance consisting essentially of material selected from the group consisting of water, protein, gas, emulsifiers, gelling and thickening agents, salt, flavour compounds, colouring matter and mixtures of two or more thereof. Other ingredients, e.g. preservatives, may, however, also be present in small amounts.

Preferably, the composition comprises at least 35% by weight of fat, more preferably it comprises from 70-100% by weight of fat.

In this application, by fat is meant, unless indicated otherwise, an edible substance, which may be solid or liquid at ambient temperature, consisting essentially of triglycerides such as, for example, soybean oil, sunflower oil, palm oil, coconut oil, fish oil, lard and tallow, which may have been partially or completely hydrogenated or modified otherwise, or comprising non-toxic material having physical properties similar to triglycerides, which material may be indigestible, such as for example waxes, e.g. jojoba oil and hydrogenated jojoba oil, and poly fatty acid esters of mono- and disaccharides, e.g. sucrose octa fatty acid ester, or

2

mixtures thereof. Preferably, however, the fat used in the compositions consists essentially of triglycerides.

The mixture leaving the device preferably is a dispersed system having a continuous fat phase containing crystallized fat. The mixture leaving the device can be packed immediately, e.g. by filling in tubs, or it can be subjected to further processing before packing it. Products that can thus be obtained are, for example, shortening, margarines, low calorie spreads and melanges. By a low calorie spread is meant a product similar to butter or margarine, i.e. a product having a continuous fat phase and a dispersed aqueous phase and containing crystallized fat, but containing less than about 80% by weight fat. By a melange is meant a product having a continuous fat phase and a dispersed aqueous phase and containing crystallized fat, wherein the fat comprises both butterfat and other fat.

The device used in the present process comprises two closely spaced, mutually displaceable surfaces, each having a pattern of cavities which overlap during movement of one surface with respect to the other. The material moving between the surfaces traces a path through cavities alternately in each surface.

Preferably, the surfaces of the device have patterns of cavities such that a cavity on one of the surfaces continuously overlaps with at least two cavities on the other surface. In the preferred device for this process, the cavities are arranged to give constantly available but changing pathways through the device during movement of one surface with respect to the other.

Suitably, the device has a cylindrical geometry.

Preferably, the device comprises a stator and a rotor; the opposing faces of the stator and rotor carry the cavities through which the material passes during its passage through the device. The external cylinder may be rotatable while the internal cylinder is fixed, but preferably the external cylinder is the stator within which the rotor is journalled.

The device may also have a planar geometry in which opposed plane surfaces having patterns of cavities would be moved mutually. Another geometry that can be used is a cone geometry. A device of such geometry can comprise a rotor and a stator having shapes of truncated cones. An advantage of a planar or cone geometry is that the distance between the two surfaces can be varied easily. Other geometries can also be suitable, but devices having a cylindrical geometry are preferred. The rotor may be located eccentrically, but preferably it is placed centrically.

Various configurations can be used for the shape of the cavities. The cavities can, for example, be hemispherical or they can have the shape of a flattened hemisphere. Other shapes that can be used are, for example, half ellipsoids or cylinders having hemispherical closed ends or flattened varieties thereof.

In the International application, publication No. WO 83/03222, an extruder is described having a geometry of the above kind. In the publication it is mentioned that this extruder can be used for operations on margarines.

Suitable devices which can be used in the present process will be described with reference to the accompanying diagrammatic drawings in which:

Figure 1             is a longitudinal section of a device with cylindrical geometry;

Figure 2             is a transverse section along the line II-II on Figure 1;

Figure 3             illustrates the pattern of cavities in the device of Figure 1; and

Figures 4, 5 and 6      illustrate other patterns of cavities.

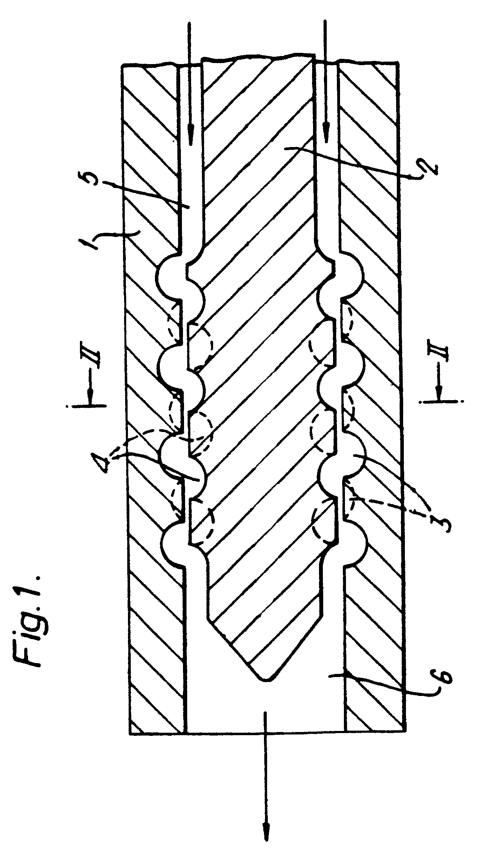

In Figure 1 is shown a device in longitudinal section. This comprises a hollow cylindrical stator member 1, a cylindrical rotor member 2 journalled for rotation within the stator with a sliding fit, the facing cylindrical surfaces of the rotor and stator carrying respective pluralities of parallel, circumferentially extending rows of cavities which are disposed with:

a) the cavities in adjacent rows on the stator circumferentially offset;

b) the cavities in adjacent rows on the rotor circumferentially offset; and

c) the rows of cavities on the stator and rotor axially offset.

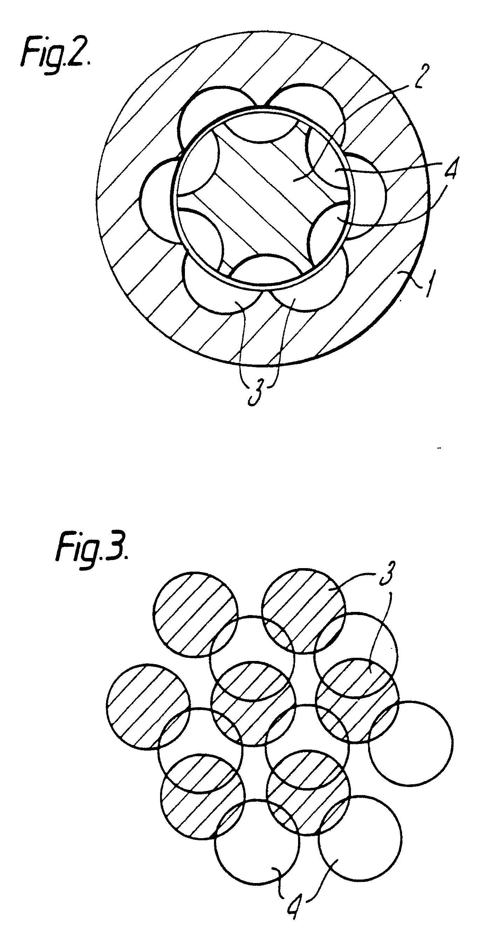

The pattern of cavities carried on the stator 3 and rotor 4 is illustrated in Figure 3. The cavities 3 on the stator are shown hatched. The overlap between patterns of cavities 3, 4 is also shown in Figure 2. The material passing through the device moves through the cavities alternately on the opposing faces of the stator and rotor. The cavities immediately behind those shown in section are indicated by dotted profiles on Figure 1 to allow the repeating pattern to be seen.

The material flow is divided between pairs of adjacent cavities on the same rotor or stator face because of the overlapping position of the cavity on the opposite stator or rotor face.

The device can, for example, have a rotor radius of 2.5 cm with 36 hemispherical cavities (radius 0.9 cm) arranged in six rows of six cavities. The internal surface of the stator can carry e.g. seven rows of six cavities to provide cavity overlap at the entry and exit. The material to be passed through the device is injected into it through channel 5, which communicates with the annular space between the rotor and stator. The material leaves the device through exit 6.

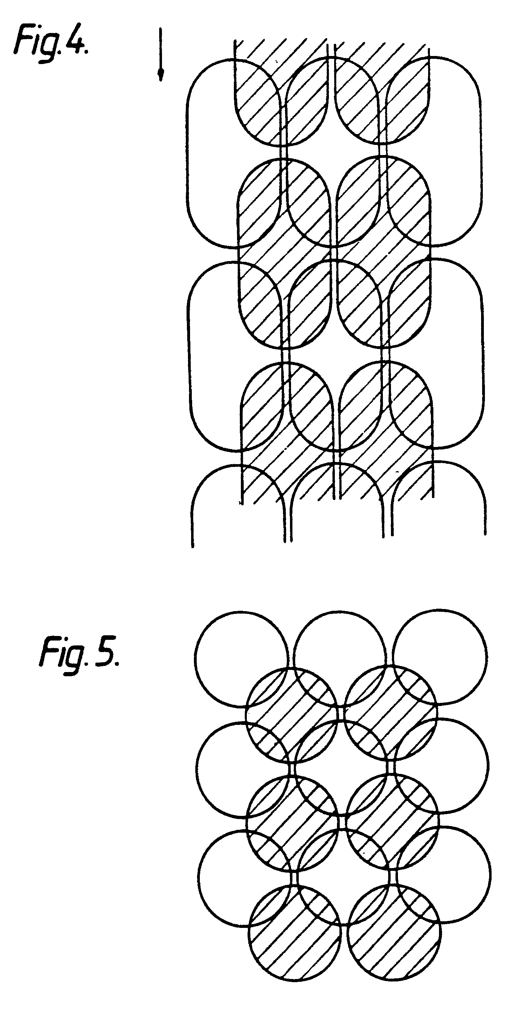

Figure 4 shows elongate cavities arranged in a square pattern; these cavities have the sectional profile of Figure 2. These cavities are aligned with their longitudinal axis parallel to the longitudinal axis of the device and the direction of movement of material through the device; the latter is indicated by the arrow.

Figure 5 shows a pattern of cavities having the dimensions and profile of those shown in Figures 1, 2 and 3. The cavities of Figure 5 are arranged in a square pattern with each cavity being closely spaced from flow adjacent cavities on the same surface. This pattern does not provide as high a degree of overlap as given by the pattern of Figure 3. The latter has each cavity closely spaced to six cavities on the same surface, in a hexagonal pattern.

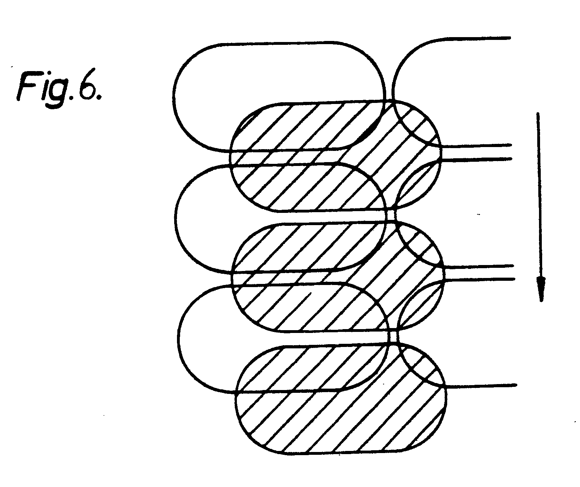

Figure 6 shows a pattern of cavities wherein the cavities on the rotor, shown hatched, and stator have a larger dimension normal to the material flow; the latter is indicated by an arrow. The cavities are thus elongate. This embodiment can provide a lower pressure drop over its length compared with devices of similar geometry but not having cavities positioned with a longer dimension normal, i.e. perpendicular to the material flow. To obtain a reduction in pressure drop, at least one of the surfaces must carry elongate cavities having their longer dimension normal to the material flow.

Example 1

A fat blend was prepared by mixing 88% by weight sunflower oil with 12% by weight of a blend prepared by random interesterification of a mixture of 44% by weight of palm oil hydrogenated to a melting point of 58° C and 56% by weight of a lower-melting fraction of palmkernel fat hydrogenated to a melting point of 41° C.

The N-values of the blend at 10, 15 and 20° C were 11.1, 8.2 and 6.4, respectively. The blend contained about 64% by weight polyunsaturated fatty acid residues and about 22% by weight of saturated fatty acid residues.

0.35% by weight emulsifiers and colouring agent were added to the fat blend.

An aqueous phase was prepared from the following ingredients:

68 wt.% water
31 wt.% soured skimmed milk
0.6 wt.% salt
0.4 wt.% preservative.

84% by weight fat blend was mixed with 16% by weight aqueous phase in a premix vessel at 45° C.

The composition was passed through a surface-scraped heat exchanger of the Votator type (A-unit) at a capacity of 4.9 kg/h. The composition left the A-unit at a temperature of 5° C, and it contained 8% by weight crystallized fat. The composition was passed via a pipe into a device of the type shown in Figure 1.

The diameters of the stator and rotor of the device were 28 and 27.7 mm, respectively, providing an annulus of 0.15 mm. The number of cavities on the stator and rotor were 36 and 42, respectively. Each cavity had a diameter of 12 mm and a depth of 4 mm. The volume between the rotor and stator surface was 50 ml. The device was operated at a rotor speed of 400 rpm. The composition entering the device had a temperature of 8.5° C. The product leaving the device had a temperature of 13° C and it contained 7% by weight crystallized fat. It was filled into tubs.

The pressure drop across the device was 0.8 bar. The pressure before the A-unit was 5 bar absolute.

The product obtained was a good quality margarine which was relatively hard without being brittle.

The hardness of the product was determined with a cone penetrometer as described in J.A.O.C.S. 36 - (1959), 345-348. The C-values obtained are shown in Table I.

4

## Table I

| Temperature (°C) | C-value (g/cm$^2$) |
|---|---|
| 5 | 405 |
| 10 | 280 |
| 15 | 265 |
| 20 | 155 |

A slightly less hard product was obtained when the device was operated at a rotor speed of 1500 rpm. In this experiment the pressure at the entrance of the production line was 4.5 bar absolute and the capacity was 4.8 kg/h. The pressure drop across the device was negligible.

### Example 2

Example 1 was repeated twice, but the experiments were carried out at a capacity of 80 kg/h and the compositions were passed through a set of A-units before being passed through the device. In one experiment the rotor speed of the device was 300 rpm, in the other experiment it was 1500 rpm. The product leaving the device was filled into tubs.

Excellent margarines were obtained, having rather fine distributions of the aqueous phase and which were relatively hard without being brittle.

Some properties of the compositions entering and leaving the device, and the hardness values of the products obtained 15 minutes after production and after 3 weeks storage are shown in Table II.

EP 0 198 533 B1

## Table II

| | rotor speed | |
|---|---|---|
| | 300 rpm | 1500 rpm |
| Before device: | | |
| - temperature (°C) | 10 | 10 |
| - solids content* (wt.%) | 7.0 | 7.5 |
| After device: | | |
| - temperature (°C) | 11 | 10 |
| - solids content* (wt.%) | 2.4 | 2.0 |
| C-values (g/cm$^2$) | | |
| - 15 min after production | 600 | 720 |
| after 3 weeks' storage | | |
| - at 5°C | 350 | 430 |
| - at 20°C | 230 | 220 |

* calculated on the weight of the total composition.

## Claims

1. Process for the preparation of an edible fat-containing product having a plastic nature, starting with a composition which comprises at least 10% by weight of fat, the balance consisting essentially of material selected from water, protein, gas, emulsifiers, gelling and thickening agents, salt, flavour compounds, colouring matter and mixtures of two or more thereof, said fat in the composition containing at most 25% by weight of crystallized fat after equilibration at 10° C as a result of a content of unsaturated fatty acid residues in the triglycerides,
and subjecting that composition to the following steps:
    a) cooling the composition in a heat exchanger, and
    b) working the composition by passing it through a device which comprises two closely spaced, mutually displaceable surfaces, each having a pattern of cavities which overlap during movement of one surface with respect to the other, the composition moving between the surfaces and tracing a path through cavities alternating in the mutually displaceable surfaces.

2. Process according to claim 1, wherein the composition comprises fat containing at most 20% by weight of crystallized fat after equilibration at 10° C.

3. Process according to claim 2, wherein the composition comprises fat containing 10 to 15% by weight of crystallized fat after equilibration at 10° C.

4. Process according to anyone of claims 1-3, wherein said fat in the composition comprises poly-unsaturated fatty acid residues and saturated fatty acid residues in a weight ratio of at least 2.5.

6

5. Process according to anyone of claims 1-4, wherein said fat in the composition comprises poly-unsaturated fatty acid residues and saturated fatty acid residues in a weight ratio of at least 4.

6. Process according to anyone of claims 1-5, wherein the composition comprises at least 35% by weight of fat.

7. Process according to anyone of claims 1-6, wherein the composition comprises from 70 to 100% by weight of fat.

8. Process according to anyone of claims 1-7, wherein each cavity on one of the surfaces of the device continuously overlaps with at least two cavities on the other surface of the device.

**Revendications**

1. Procédé pour la préparation d'un produit comestible contenant de la graisse présentant un caractère plastique, en partant d'une composition qui comprend au moins 10% en poids de graisse, le complément étant essentiellement une matière choisie parmi l'eau, les protéines, les gaz, les émulsifiants, les agents de gélification et d'épaississement, le sel, les composés de saveur, les colorants et des mélanges de deux ou plusieurs de celles-ci, ladite graisse dans la composition contenant au plus 25% en poids de graisse cristallisée après équilibrage à 10° C par suite d'une teneur en restes d'acides gras insaturés dans les triglycérides, et on soumet la composition aux stades suivants :
   a) refroidir la composition dans un échangeur de chaleur, et
   b) travailler la composition en la faisant passer à travers un dispositif comprenant deux surfaces très rapprochées et mobiles l'une par rapport à l'autre, ayant chacune un motif de cavités se superposant au cours du mouvement d'une surface par rapport à l'autre, la composition se déplaçant entre les surfaces et accomplissant un trajet à travers les cavités en alternance dans les surfaces mutuellement mobiles.

2. Procédé selon la revendication 1, dans lequel la composition comprend une graisse contenant au plus 20% en poids de graisses cristallisées après équilibrage à 10° C.

3. Procédé selon la revendication 2, dans lequel la composition comprend une graisse contenant de 10 à 15% en poids de graisse cristallisée après équilibrage à 10° C.

4. Procédé selon l'une quelconque des revendications 1 à 3, dans lequel ladite graisse dans la composition comprend des restes d'acides gras polyinsaturés et des restes d'acides gras saturés en un rapport pondéral d'au moins 2,5.

5. Procédé selon l'une quelconque des revendications 1 à 4, dans lequel ladite graisse dans la composition comprend des restes d'acides gras polyinsaturés et des restes d'acides gras saturés en un rapport pondéral d'au moins 4.

6. Procédé selon l'une quelconque des revendications 1 à 5, dans lequel la composition comprend au moins 35% en poids de graisse.

7. Procédé selon l'une quelconque des revendications 1 à 6, dans lequel la composition comprend de 70 à 100% en poids de graisse.

8. Procédé selon l'une quelconque des revendications 1 à 7, dans lequel chaque cavité sur l'une des surfaces du dispositif surmonte en permanence au moins deux cavités sur l'autre surface du dispositif.

**Patentansprüche**

1. Verfahren zur Herstellung eines eßbaren, Fett enthaltenden Produktes von plastischer Beschaffenheit, ausgehend von einer Zusammensetzung, die zu mindestens 10 Gew.-% aus Fett besteht, während der Rest aus der aus Wasser, Protein, Gasen, Emulgatoren, Gelier- und Verdickungsmitteln, Salz, Geschmacksverbindungen, Farbstoffen und Mischungen von zwei oder mehreren dieser Stoffe bestehenden Gruppe ausgewählt ist,

wobei das Fett in der Zusammensetzung höchstens 25 Gew.-% eines kristallisierten Fettes nach Gleichgewichtseinstellung bei 10° C als Ergebnis eines Gehaltes an ungesättigten Fettsäureresten in den Triglyceriden enthält,
indem diese Zusammensetzung folgenden Bearbeitungsschritten unterworfen wird:

a) Kühlen der Zusammensetzung in einem Wärmetauscher und

b) Bearbeiten der Zusammensetzung durch Hindurchleiten durch eine Vorrichtung, die zwei gegeneinander verschiebbare, mit einem engen Zwischenraum angeordnete Oberflächen aufweist, von denen jede ein Muster von Vertiefungen hat, die sich bei der Bewegung der einen Oberfläche relativ zur anderen überschneiden, so daß sich die Zusammensetzung zwischen den Oberflächen bewegt und sich einen Weg durch die in den gegeneinander verschiebbaren Oberflächen wechselnden Vertiefungen sucht.

2. Verfahren nach Anspruch 1, dadurch gekennzeichnet, daß die Zusammensetzung Fett umfaßt, das höchstens 20 Gew.-% eines nach Gleichgewichtseinstellung bei 10° C kristallisierenden Fettes enthält.

3. Verfahren nach Anspruch 2, dadurch gekennzeichnet, daß die Zusammensetzung Fett umfaßt, das 10 bis 15 Gew.-% eines nach Gleichgewichtseinstellung bei 10° C kristallisierten Fettes enthält.

4. Verfahren nach einem der Ansprüche 1 bis 3, dadurch gekennzeichnet, daß das Fett in der Zusammensetzung mehrfach ungesättigte Fettsäurereste und gesättigte Fettsäurereste in einem Gewichtsverhältnis von mindestens 2,5 umfaßt.

5. Verfahren nach einem der Ansprüche 1 bis 4, dadurch gekennzeichnet, daß das Fett in der Zusammensetzung mehrfach ungesättigte Fettsäurereste und gesättigte Fettsäurereste in einem Gewichtsverhältnis von mindestens 4 umfaßt.

6. Verfahren nach einem der Ansprüche 1 bis 5, dadurch gekennzeichnet, daß die Zusammensetzung zu mindestens 35 Gew.-% aus Fett besteht.

7. Verfahren nach einem der Ansprüche 1 bis 6, dadurch gekennzeichnet, daß die Zusammensetzung zu 70 bis 100 Gew.-% aus Fett besteht.

8. Verfahren nach einem der Ansprüche 1 bis 7, dadurch gekennzeichnet, daß sich jede Vertiefung in einer der Oberflächen der Vorrichtung kontinuierlich mit mindestens zwei Vertiefungen in der anderen Oberfläche der Vorrichtung überschneidet.

Fig.1.

Fig.2.

Fig.3.

EP 0 198 533 B1

# Fig. 4.

# Fig. 5.

EP 0 198 533 B1

*Fig.6.*

12